# EUROPEAN PATENT SPECIFICATION

(11) **EP 2 890 234 B1**
(45) Date of publication and mention of the grant of the patent: **22.03.2017**
(21) Application number: 13758967.7
(22) Date of filing: 22.08.2013
(51) Int. Cl.: A01D 34/76

(54) **AUTOMATIC MOWING BLADE ENGAGEMENT AND DISENGAGEMENT FOR WINGED MOWER**
AUTOMATISCHE EINRASTUNG UND LÖSUNG EINER MÄHKLINGE FÜR EINEN FLÜGELMÄHER
MISE EN PRISE ET DÉGAGEMENT AUTOMATIQUES D'UNE LAME DE FAUCHAGE POUR TONDEUSE À AILETTES

(30) Priority: 30.08.2012 GB 201215473; 31.12.2012 GB 201223518
(43) Date of publication of application: 08.07.2015
(73) Proprietor: Wessex International Machinery, East Portway Industrial Estate Andover Hampshire SP10 3QN (GB)
(72) Inventor: BROWNING, Charles, Andover Hampshire SP10 3QN (GB); JAMES, Robert, Andover Hampshire SP10 3QN (GB)
(74) Representative: chapman + co
(86) International application number: PCT/GB2013/052222
(87) International publication number: WO 2014/033435

(56) References cited:
- WO-A2-2011/136666
- GB-A- 1 241 751
- US-A1- 2011 277 434

## Description

This invention relates to a mechanism for automatically engaging and/or disengaging a mowing blade of a pivotable mowing wing, and particularly but not exclusively to a mechanism for automatically engaging and/or disengaging a mowing blade of a pivotable mowing wing of a co-axial vertical drive belt mowing apparatus.

As used herein, the horizontal plane is defined in as the plane parallel to the ground on which the mowing apparatus is situated.

Similarly, as used herein, the vertical direction is defined as the direction perpendicular to the above-defined horizontal plane i.e. perpendicular to the plane of the ground on which the mowing apparatus is situated. It will be appreciated that this may differ slightly from the vertical direction defined in terms of the direction of gravity if the mower is situated on sloping ground.

Mowers are widely used for cutting grass and plant matter. A wide variety of mowers are available for both domestic and industrial use including push-mowers, self-propelled mowers and tractor-drawn mowers. The present invention predominantly relates to self-propelled mowers and tractor-drawn mowers for agricultural or other industrial use but is not limited to this application.

A typical self-propelled (ride-on) mower comprises a body portion having a plurality of mowing blades located on its disposed face. The mowing blades are powered by a drive pulley, which receives energy from a rotary drive. The mower may also comprise one or more wing portions pivotally coupled to the body portion. Generally two wing portions are disposed laterally either side of the body portion with respect to the direction of travel of the mower. A third wing portion may also be disposed rearwardly of the body portion with respect to the direction of travel. An underside of each wing portion comprises a plurality of mowing blades powered by a driven pulley operatively coupled to the drive pulley.

Similarly, a typical tractor-drawn mower comprises a body portion and one or more wing portions pivotally coupled thereto. The body portion includes attachment means for detachably coupling to a tractor (for example via a 3-point hitch of the tractor) and a rotary drive assembly arranged to receive power from a Power Take Off (PTO) of the tractor. A plurality of mowing places are disposed on the lower face of the body portion and powered by the drive assembly via a drive pulley. The wing portions are generally disposed laterally of the body portion but the mower may also comprise a wing portion disposed rearwardly of the body portion. An underside of each wing portion includes a plurality of mowing blades powered by a driven pulley operatively coupled to the drive pulley.

In both the self-propelled and tractor-drawn mowers, the pivotal coupling between the body portion and wing portions enables rotation of the wing portions between a lowered position and a raised position. In the lowered position, each wing portion are is aligned such that its underside is substantially in the horizontal plane i.e. subsantially parallel to the plane of the ground below the mowing apparatus. In order to cut grass or other plant material, the wing portions are configured in the lowered position and the mowing blades are engaged. In the raised position, the wing portions are pivoted away from the ground, typically at an angle of approximately 90 degrees relative to the ground. Whilst in the raised position, the footprint of the mowing apparatus is substantially reduced, thereby facilitating transport and storage. However, it will be appreciated that whilst the wing portions are in the raised position, the mowing blades are exposed and thus rotation of the mowing blades presents a serious safety risk. Accordingly, it is desirable to automatically disengage the mowing blades of the wing portions when the wing portions are raised above a certain angle relative to the ground.

A number of solutions to the problem of disengaging the mowing blades have been proposed, each solution particular to the type of drive system utilised within the mowing apparatus.

One known drive system comprises a horizontal drive belt arrangement. In this arrangement the drive pulley and driven pulley have substantially vertical axes of rotation. One problem with this known arrangement is that the drive belt becomes slack when the wing portion is raised above approximately 13 degrees relative to the ground. Accordingly, the mowing blades disposed on the underside of the wing portions are disengaged when the wing is raised above this angle. It will be appreciated that this greatly limits the ability of the mowing apparatus to follow ground undulations whilst maintaining drive to the blades. Furthermore, the drive belt must be checked and adjusted on a regular basis in order to maintain efficient engagement between the belt and the pulleys and to minimise belt wear. This requires the attention of a skilled mechanic and can result in significant machine downtime.

One possible solution to the above-mentioned problems is to replace the horizontal belt drive with a vertical belt drive, in which the axes of rotation of the drive pulley and driven pulley extend in the horizontal plane. Within a vertical belt drive system, the driven pulley may be mounted co-axially with the axis of rotation of the wing portion, or it may be displaced therefrom.

In the co-axial arrangement, the position of both the drive pulley and the driven pulley is fixed throughout the range of movement of the wing portion and hence the driven pulley remains operatively coupled to the drive pulley and the mowing blades remain engaged when the wing portion is raised. In order to disengage the blades, one known device includes a push rod that is displaced within the gearbox and forces the disengagement of the mowing blades. A major problem with this arrangement is that it is similar to putting a vehicle in gear without depressing the clutch and thus it causes significant wear and tear to the gearbox. Furthermore, the mowing blades cannot be re-engaged once the wing has been lowered again unless this is done manually, thereby requiring the operator to leave the safe environment of his cab.

In the non co-axial arrangement, the position of the driven pulley with respect to the drive pulley varies in accordance with the angular position of the wing portion. As such, the drive belt maintains its tension for a limited angular range of motion, typically becoming slack and thus disengaging the mowing blades once the wing portion is raised above an angle of 20 degrees to the horizontal. A disadvantage of this arrangement is that it limits the ability of the mowing apparatus to follow ground undulations whilst maintaining drive to the blades. Furthermore, the drive belt must be checked and adjusted on a regular basis to maintain efficient drive and to minimise belt wear.

WO 2011/136666 A2 discloses a drive system for lateral deck mowers attached to a tractor or other vehicle. US2011/277434 A1 discloses a self-engaging wing lawn mower for cutting grass.

We have now devised an improved mowing apparatus.
In accordance with the present invention there is provided a mowing apparatus comprising:
a body portion comprising rotary drive means;
a wing portion for engaging the grass or other plant matter to be cut, the wing portion comprising rotary cutting means arranged to cut the grass or other plant matter and being pivotable about a main axis relative to the body portion between a lowered cutting position and a raised position; and,
means for coupling said drive means to said cutting means through a limited range of angular positions of the wing between said lowered position and a partially raised position, said coupling means being arranged to couple said drive means and said cutting means when the wing is in said lowered position and decouple said drive means from said cutting means when the wing is in said partially raised position, the coupling means comprising
a first pulley provided on the body and coupled to said rotary drive means,
characterised in that the coupling means further comprises:
   a second pulley mounted on the wing portion for rotation about an axis which extends longitudinally of said main axis, the second pulley being connected to said cutting means,
      a belt extending around said first and second pulleys, and
      a belt tensioner arranged to vary the tension of the belt to couple and decouple the drive and cutting means according to said angular positions of the wing. Advantageously the cutting means of the wing portion is automatically engaged or disengaged as the angular position of the wing portion is varied, thereby alleviating the safety risk associated with the exposed mowing blades.
The axis of rotation of the second pulley is preferably co-axial with the main axis.

The axis of rotation of the first pulley is preferably substantially parallel to the axis of rotation of the second pulley. More preferably, the axis of rotation of both the first and second pulleys is substantially in the horizontal plane i.e. the mowing apparatus is preferably of the co-axial vertical drive belt type.

Preferably the belt tensioner comprises an idler pulley and is preferably rotatably mounted so as to displace the idler pulley via rotation of the belt tensioner, the displacement of the idler pulley preferably acting to vary the tension of the belt to couple and decouple the drive and cutting means according to said angular positions of the wing.

The idler pulley may be biased towards the belt by biasing means, which may comprise a spring and preferably comprises a gas spring.

The coupling means may further comprise an arm pivotally coupled at its proximal end to the body portion. The idler pulley may be disposed on the arm such that rotation of the arm acts to displace the idler pulley and thereby vary the tension of the belt to couple and decouple the drive and cutting means according to said angular positions of the wing.

Preferably the wing portion is inclined at an angle of approximately 30 degrees to the horizontal plane in said partially raised position. In this context, the term "approximately" should be interpreted as within 10 degrees.

The coupling means preferably comprises a cam and a cam follower respectively provided on said portions, the drive and cutting means being coupled and decoupled by the cam follower according to the profile of the cam.

The cam is preferably disposed at an edge of the wing portion proximal to the body portion. Preferably an axis of rotation of the cam is substantially parallel to the main axis, and most preferably coaxial with the main axis. It will be appreciated that in this arrangement, the wing portion and the cam rotate concurrently i.e. the degree of rotation of the cam is equivalent to the degree of rotation of the wing portion.

Preferably the cam is a disk cam, the cam follower preferably moving in plane perpendicular to axis of cam.

The cam preferably comprises an outer radial edge comprising a first radial dimension and a second circumfrentially spaced radial dimension, wherein the second radial dimension is not equal to the first radial dimension. The second radial dimension is preferably greater than the first radial dimension. In this preferred embodiment, the belt couples the drive and cutting means when the outer radial edge at the contact location comprises the first radial dimension whilst the drive and cutting means are decoupled when the outer radial edge at the contact location comprises the second radial dimension.

Preferably the outer radial edge of the cam comprises the first radial dimension when the angular position of the wing portion is such that the wing portion is inclined at an angle of less than approximately 30 degrees to the horizontal plane. Again, in this context, the term "approximately" should be interpreted as within 10 degrees.

Preferably the outer radial edge of the cam comprises the second radial dimension when the angular position of the wing portion is such that the wing portion is inclined at an angle of greater than approximately 30 degrees. Again, in this context, the term "approximately" should be interpreted as within 10 degrees. It will be appreciated that in this preferred embodiment, the belt couples the drive and cutting means when the wing portion forms an angle of less than approximately 30 degrees to the horizontal plane, whilst the drive and cutting means are decoupled when the wing portion forms an angle of greater than approximately 30 degrees to the horizontal plane.

In the embodiment in which the coupling means comprises a belt tensioner, the cam follower may be arranged to displace the belt tensioner so as to vary the tension of the belt to couple and decouple the drive and cutting means according to said angular positions of the wing.

Preferably the cam follower is located on a distal end of the arm, the proximal end of the arm being preferably pivotally coupled to the body portion. The belt tensioner is preferably disposed intermediate the proximal and distal ends of the arm. In this preferred embodiment, rotation of the cam causes the arm to pivot about its proximal end and thus displaces the belt tensioner towards or away from the belt.

Alternatively, the coupling means may comprise a rigid member coupled at a first end to the wing portion at a position located eccentrically with respect to the main axis and coupled at a second end to the belt tensioner, the rigid member preferably being arranged to displace the belt tensioner so as to vary the tension of the belt to couple and decouple the drive and cutting means according to said angular positions of the wing.

The coupling of the first end of the rigid member may comprise a slot extending in a direction substantially parallel to a longitudinal axis of the rigid member and a pin arranged for sliding engagement with the slot and constrained therein, the pin being attached to the wing portion. It will be appreciated that this embodiment allows for the translation of the axis of rotation of the pivotal coupling of the first end. In this embodiment, the coupling of the second end may comprise a pivotal coupling having a fixed axis of rotation.

Alternatively, the coupling of the second end of the rigid member may comprise a slot extending in a direction substantially parallel to a longitudinal axis of the rigid member and a pin arranged for sliding engagement with the slot and constrained therein, the pin being attached to the belt tensioner. Preferably the pin is attached to the arm of the coupling means. It will be appreciated that this embodiment allows for the translation of the axis of rotation of the pivotal coupling of the second end. In this embodiment, the coupling of the first end may comprise a pivotal coupling having a fixed axis of rotation.

Preferably the belt tensioner comprises an axis of rotation, the belt tensioner being preferably connected to the rigid member at a first location and comprising an idler pulley at a second location such that the rigid member acts to rotate the belt tensioner and hence displace the idler pulley to couple and decouple the drive and cutting means according to said angular positions of the wing.

The rigid member may comprise a rod.

The body portion preferably comprises an underside, which preferably extends in a plane substantially parallel to the horizontal plane. Further cutting means may be disposed upon the underside of the body portion.

The body portion may comprise attachment means for attaching to a tractor or other motor vehicle. The drive means is preferably arranged to receive power from a Power Take-Off of a tractor.

Preferably the mowing apparatus comprises two wing portions, the wing portions being preferably disposed laterally either side of the body portion.

An embodiment of the present invention will now be described by way of example only and with reference to the accompanying drawings, in which:
Figure 1 is a perspective view of a mowing apparatus in accordance with the present invention;
Figure 2 is a front view of the mowing apparatus of Figure 1, illustrated in a first configuration in Figure 2(a) and a second configuration in Figure 2(b);
Figure 3 is a plan view of the mowing apparatus of Figures 1 and 2, illustrated in the first configuration in Figure 3(a) and the second configuration in Figure 3(b); and,
Figure 4 is an enlarged front view of a portion of the mowing apparatus of Figures 1 to 3, illustrated in the first configuration in Figure 4(a) and the second configuration in Figure 4(b); and,
Figure 5 is a front view of portion of a mowing apparatus in accordance with an alternative embodiment of the present invention, illustrated in the first configuration in Figure 5(a) and the second configuration in Figure 5(b).

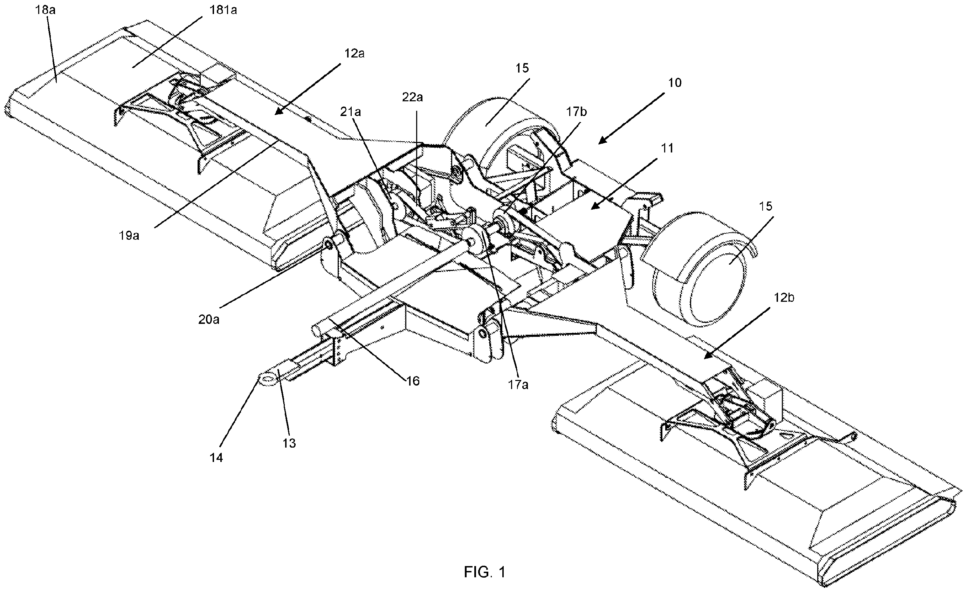

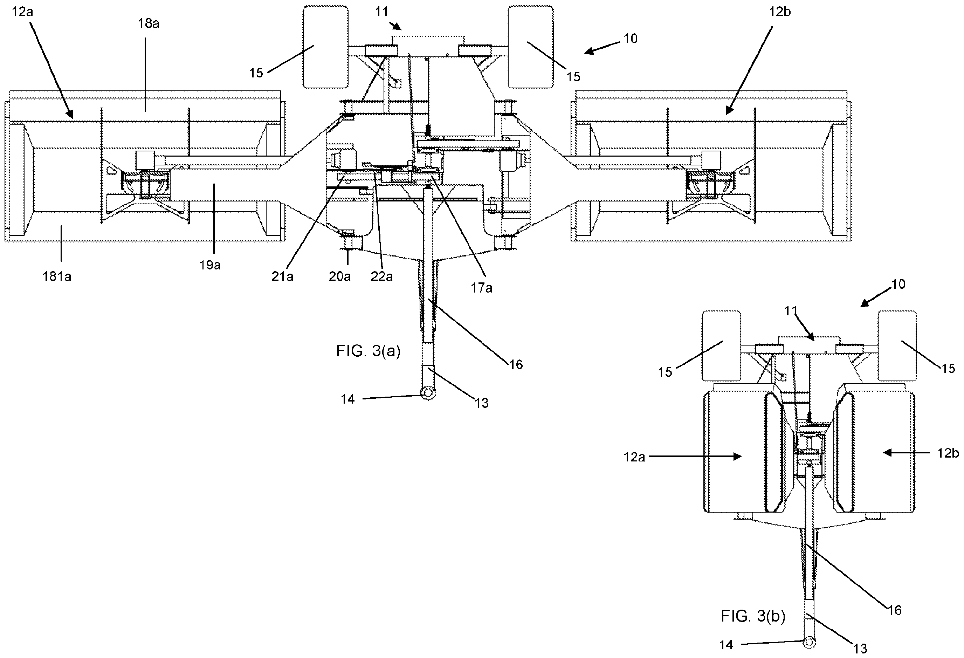

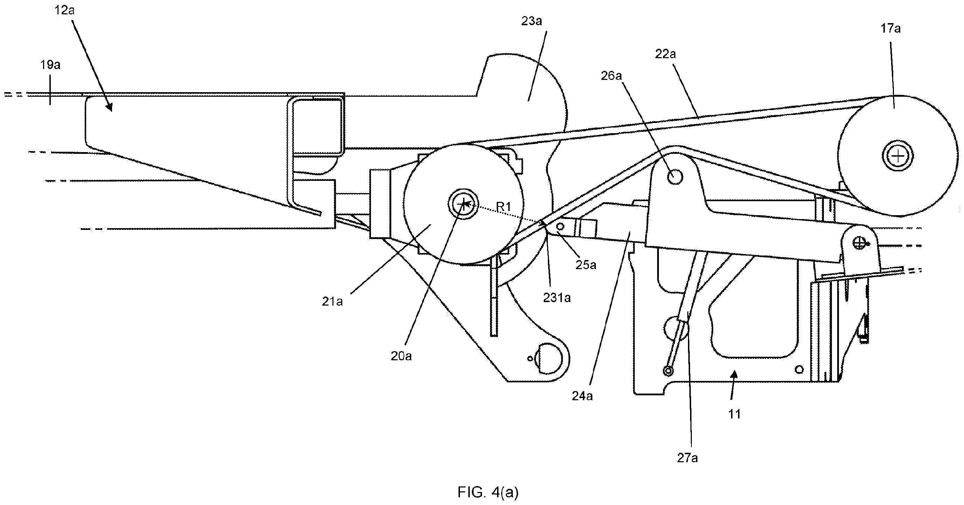

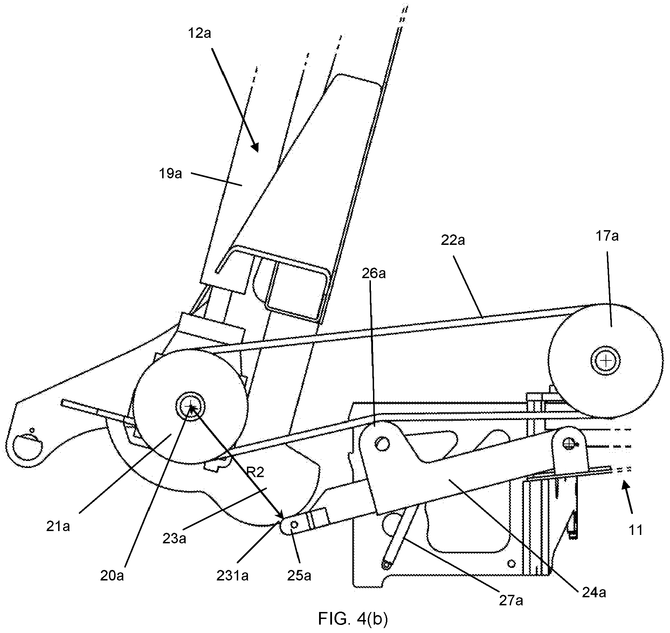

Referring to figures 1 to 4 of the drawings, there is illustrated a mowing apparatus 10 in accordance with the present invention. Whilst the illustrated mowing apparatus 10 is of the tractor-drawn type, it should be appreciated that the present invention is also applicable to other mowing devices such as self-propelled (ride-on) mowers.

The mowing apparatus 10 comprises a body portion 11, a first wing portion 12a and second wing portion 12b. The body portion 11 comprises a longitudinal axis which extends parallel to the direction of travel of the mowing apparatus 10 whilst in use, the wing portions 12a, 12b being located laterally symmetrically either side of the longitudinal axis of the body portion 11.

An attachment mechanism is disposed at the front of the body portion 11, the front being defined in relation to the direction of travel of the mowing apparatus 10 whilst in use. In the illustrated embodiment, the attachment mechanism comprises an elongate arm 13 having a collar 14 for cooperation with a tow-bar of a tractor (not shown). Wheels 15 are located at the rear end of the body portion 11 either side of the longitudinal axis thereof. A Power Take-Off (PTO) shaft 16 connects a rotary drive (not shown) of the body portion 11 to a Power Take-Off (PTO) of the tractor, thereby enabling the mowing apparatus 10 to receive power from the tractor to which it attaches. A plurality of mowing blades (not shown) are disposed on the underside of the body portion 11 and driven by the rotary drive.

The body portion 11 comprises two co-axial drive pulleys 17a, 17b having an axis of rotation in the horizontal plane. The first drive pulley 17a is arranged for driving the mowing blades of the first wing portion 12a and the second drive pulley is arranged for driving the mowing blades of the second wing portion 12b. The drive pulleys 17a, 17b receive power from the Power Take Off (PTO) of the tractor via the rotary drive.

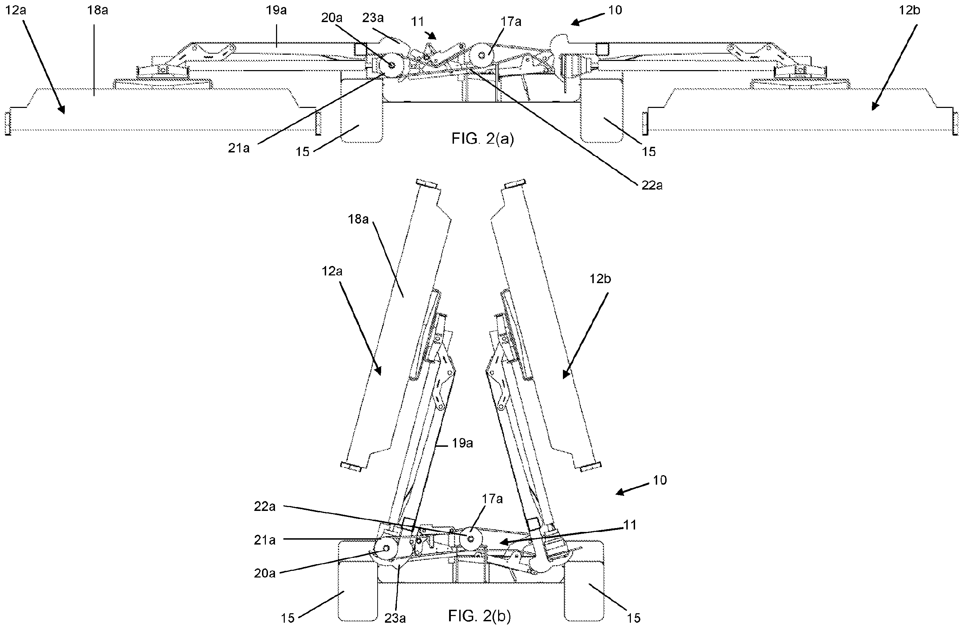

The following description relates to the first wing portion 12a but the second wing portion 12b comprises an equivalent arrangement. The wing portion 12a comprises a mowing deck 18a having a substantially rectangular lower face (not shown) and an upper face 181a of substantially equal size and shape. The height of the mowing deck 18a (i.e. the separation of the lower and upper faces) is small in comparison to the dimensions of the upper and lower faces. The lower face of the wing portion 12a comprises a plurality of mowing blades (not shown) arranged for cutting grass and other plant matter. The upper face 181 a of the mowing deck 18a is fixedly coupled to a distal end of an arm 19a. The proximal end of the arm 19a is pivotally coupled to the body portion 11 about an axis of rotation 20a substantially parallel to the rotation axis of the co-axial drive pulleys 17a 17b. By virtue of the pivotal coupling, the wing portion 12a is reconfigurable between a lowered position and a raised position relative to the body portion 11. The lowered position of the wing portion 12a is illustrated in Figures 2(a), 3(a) and 4(a), whilst the raised position of the wing portion 12a is illustrated in Figures 2(b), 3(b) and 4(b). In the lowered position, the lower face of the wing portion 12a is substantially parallel to the plane of the ground. In this position the mowing blades (not shown) abut long grass or other plant matter and hence rotary motion of the mowing blades acts to cut any grass or plant matter of a height greater than the height of the blades. In the raised position, the wing portion 12a extends upwardly and hence the width of the mowing apparatus 10 is substantially reduced, thereby allowing for easy transport and storage.

A driven pulley 21 a is disposed co-axially with the axis of rotation 20a of the wing portion 12a and operatively coupled to the mowing blades disposed on the lower face of the mowing deck 18a. The driven pulley 21 a is arranged for cooperation with the drive pulley 17a via a drive belt 22a. A disk cam 23a is fixedly coupled to the wing portion 12a, the cam 23a having an axis of rotation coaxial with the axis of rotation 20a of the wing portion 12a.

A belt tensioning mechanism is provided for adjusting the tension of the drive belt 22a in dependence upon the angular position of the wing portion 12a. The belt tensioning mechanism comprises an elongate arm 24a having a longitudinal axis substantially perpendicular to the axis of rotation 20a of the wing portion 12a. The proximal end of the arm 24a is pivotally coupled to the body portion 11 about an axis of rotation substantially parallel to the axis of rotation 20a of the wing portion 12a. The distal end of the arm 24a comprises a cam-follower 25a arranged to contact the cam 23a at a contact location 231 a on the outer radial edge of the cam 23a. It will be appreciated that the position of the contact location 231 a varies in dependence upon rotation of the cam 23a and hence the rotation of the wing portion 12a. An idler pulley 26a protrudes laterally from the arm 24a intermediate the distal and proximal ends thereof, the axis of rotation of the idler pulley 26a being substantially parallel to the axis of rotation 20a of the wing portion 12a and hence substantially parallel to the axis of rotation of the drive pulley 17a and driven pulley 21 a. The arm 24a is biased towards the belt 22a by a gas spring 27a but is selectively deflected therefrom by the interaction between the cam 23a and cam-follower 25a. In particular, the cam 23a has an outer radial edge comprising a circumferentially varying radius: the outer radial edge of the cam 23a comprises a first radial dimension R1 and a second radial dimension R2 greater than the first radial dimension. In the illustrated embodiment, the outer radial edge of the cam 23a comprises the first radial dimension R1 when the angle between the lower face of the wing portion 12a and the ground is between 0 degrees and 30 degrees. The outer radial edge of the cam comprises the second radial dimension R2 when the angle between the lower face of the wing portion 12a and the ground is between 0 degrees and 90 degrees. The idler pulley 26a engages with the drive belt 22a when the outer radial edge of the cam 23a at the contact location comprises the first radial dimension R1 i.e. when the angle between the lower face of the wing portion 12a and the ground is less than 30 degrees. The drive belt is in the under tension whilst the idler pulley 26a is engaged therewith, and hence the mowing blades are driven by the drive assembly. Once the wing portion 12a is raised above 30 degrees, the outer radial edge of the cam 23a comprises the second radial dimension R2. Since this radial dimension R2 is larger than the first radial dimension R1, the arm 24a is deflected away from the drive belt 22a and hence the idler pulley 26a disengages with the drive belt 22a. The drive belt 22a is not under tension whilst the idler pulley 26a is disengaged, and hence the drive pulley 17a and driven pulley 21a are decoupled and the mowing blades are disengaged.

The angle of approximately 30 degrees at which the transition between the first radial dimension R1 and the second radial dimension R2 occurs is believed by the applicants to offer the ideal compromise between the ability of the mowing apparatus to traverse undulations and the safety risk of unguarded mowing blades. However, it will be appreciated that the cam 23a may be formed such that transition between the first radial dimension R1 and the second radial dimension R2 occurs at an angle other than 30 degrees and hence the angle of the wing portion 12 to the horizontal plane in the partially raised position in which the mowing blades are decoupled may be an angle other than 30 degrees.

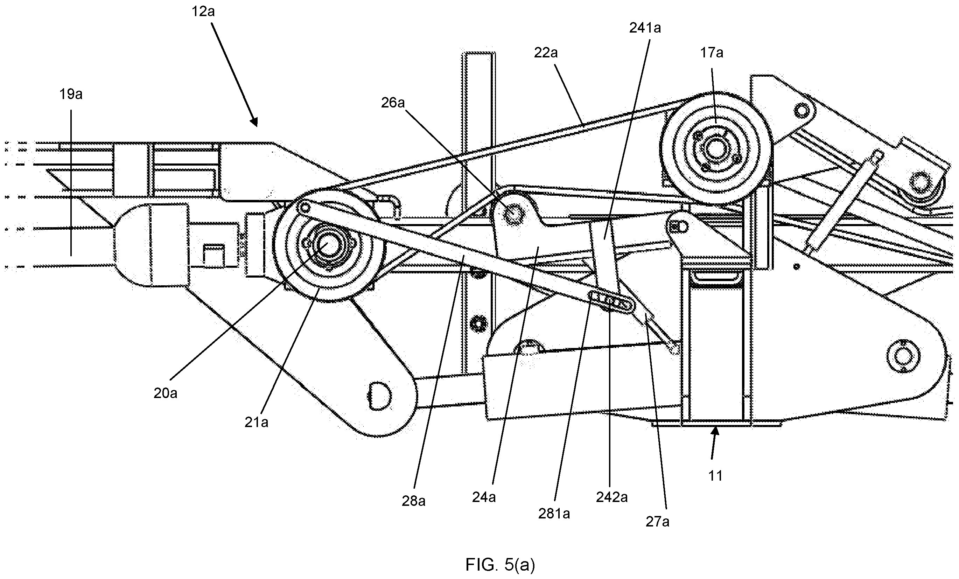

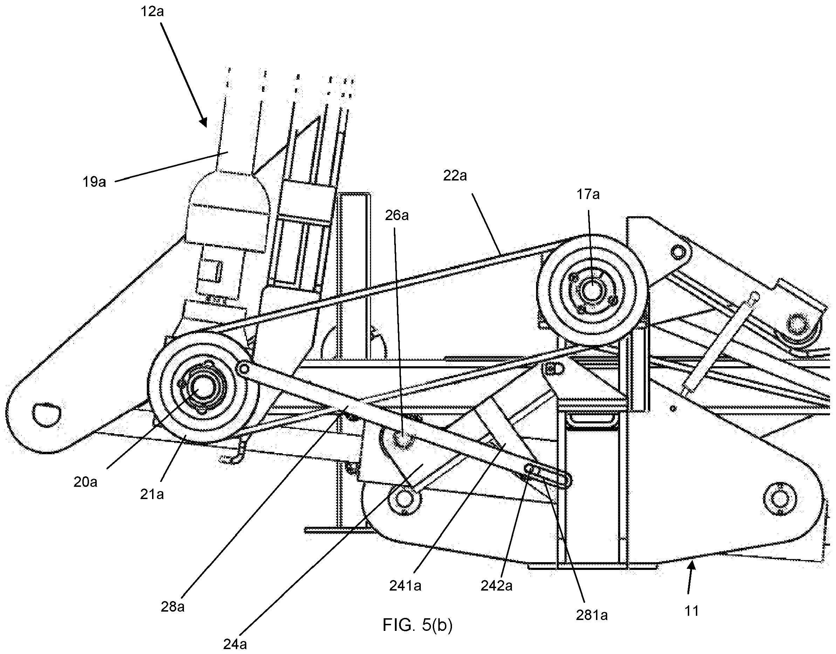

Referring to figure 5 of the drawings, there is illustrated an alternative embodiment of a mowing apparatus in accordance with the present invention. The mowing apparatus comprises many of the same features as those described above with reference to figures 1 to 4, with like features being given like reference numerals. The alternative embodiment illustrated in figure 5 comprises an alternative coupling mechanism intermediate the drive pulley 17a disposed on the body portion 11 and driven pulley 21a disposed on the wing portion 12a. The following description relates to the first wing portion 12a but the second wing portion 12b comprises an equivalent arrangement.

Similarly to the first embodiment, the belt tensioning mechanism comprises an elongate arm 24a having a longitudinal axis substantially perpendicular to the axis of rotation 20a of the wing portion 12a. The proximal end of the arm 24a is pivotally coupled to the body portion 11 about an axis of rotation substantially parallel to the axis of rotation 20a of the wing portion 12a. The arm 24a is biased towards the belt 22a intermediate the drive pulley 17a and driven pulley 21 a by a gas spring 27a, but is selectively deflected therefrom by the rod 28a.

An elongate finger portion 241a protrudes laterally from a position on the arm 24a approximately mid-way between the proximal and distal ends thereof. A pin 242a is secured to the elongate finger portion at a distal end thereof. The pin 242a is constrained within an elongate slot 281a formed within a rigid rod 28a such that the pin 242a may move slidingly within the slot 281 a. The rod 28a extends to the wing portion 12a and is coupled thereto. In particular, the rod 28a is pivotally coupled to the wing portion 12a at a position displaced from the axis of rotation 20a of the wing portion 21a. Accordingly, rotation of the wing portion 21a acts to displace the rod 28a.

An idler pulley 26a protrudes laterally from the arm 24a at a proximal end thereof, the axis of rotation of the idler pulley 26a being substantially parallel to the axis of rotation 20a of the wing portion 12a and hence substantially parallel to the axis of rotation of the drive pulley 17a and driven pulley 21 a.

In use, when the wing portion 12a is in the lowered position illustrated in figure 5(a), the pin 242a is disposed substantially centrally within the slot 281a and thus the rod 28a does not exert a force on the arm 24a. In this position, the position of the arm 24a is dictated solely by the actions of gravity and the gas spring 27a. As a result of the bias exerted by the gas spring 27a, the arm 24a is directed towards the drive belt 22a intermediate the drive pulley 17a and driven pulley 21 a such that the idler pulley 26a is in contact with the belt 22a and the belt 22a is under tension. Accordingly, in this configuration the drive pulley 17a and driven pulley 21a are coupled and hence power is supplied to the mowing deck 18a.

As the wing portion 12a is raised from the horizontal position, the coupling point intermediate the rod 28a and wing portion 12a moves clockwise and hence towards the body portion 11 in the illustrated example. Accordingly, the pin 242a moves leftwardly within the slot 281a i.e. towards the end of the slot 281a proximal to the wing portion 12a. As illustrated in figure 5(b), when the angle of the wing portion 12a is approximately 30 degrees to the horizontal, the pin 242a is located at the leftmost end of the slot 281a. Any further rotation of the wing portion 12a exerts a force on the arm 24a that acts to deflect the idler pulley 26a away from the belt 22, thereby relieving tension from the belt 22 and hence decoupling the driven pulley 21 a from the drive pulley 17a.

It will be appreciated that the slot 281a within the rod 28a ensures that there is an angular range of movement in which the position of the arm 24a, and hence the tension within the belt 22, remains constant. Furthermore, the slot 281a minimises any risk of damage to the mechanism as the wing portion 12a to move up and down following the ground contours.

From the foregoing therefore, it is evident that the present invention provides a simple yet effective means of automatically disengaging the mowing blades of a wing portion of a mowing apparatus when the wing portion is raised above a certain angle.

## Claims

1. A mowing apparatus (10) comprising:
a body portion (11) comprising rotary drive means;
a wing portion (12a) for engaging the grass or other plant matter to be cut, the wing portion (12a) comprising rotary cutting means arranged to cut the grass or other plant matter and being pivotable about a main axis relative to the body portion (11) between a lowered cutting position and a raised position; and,
means for coupling said drive means to said cutting means through a limited range of angular positions of the wing (12a) between said lowered position and a partially raised position, said coupling means being arranged to couple said drive means and said cutting means when the wing is in said lowered position and decouple said drive means from said cutting means when the wing is in said partially raised position,
the coupling means comprising
a first pulley (17a) provided on the body and coupled to said rotary drive means,
**characterised in that** the coupling means further comprises a second pulley (21 a) mounted on the wing portion for rotation about an axis which extends longitudinally of said main axis, the second pulley (21 a) being connected to said cutting means,
a belt (22a) extending around said first and second pulleys, and
a belt tensioner arranged to vary the tension of the belt (22a) to couple and decouple the drive and cutting means according to said angular positions of the wing.

2. A mowing apparatus (10) according to claim 1, wherein the axis of rotation of the second pulley (21 a) is co-axial with the main axis.

3. A mowing apparatus (10) according to claim 1 or claim 2, wherein the axis of rotation of the first pulley (17a) is substantially parallel to the axis of rotation of the second pulley (21a).

4. A mowing apparatus (10) according to any of claims 1 to 3, wherein the belt tensioner comprises an idler pulley (26a).

5. A mowing apparatus (10) according to claim 4, wherein the idler pulley (26a) is biased towards the belt (22a) by biasing means.

6. A mowing apparatus (10) according to claim 5, wherein the biasing means comprises a gas spring (27a).

7. A mowing apparatus (10) according to any of claims 4 to 6 further comprising an arm (24a) pivotally coupled at its proximal end to the body portion (11), wherein the idler pulley (26a) is disposed on the arm (24a) such that rotation of the arm (24a) acts to displace the idler pulley (26a) and thereby vary the tension of the belt (22a) to couple and decouple the drive and cutting means according to said angular positions of the wing.

8. A mowing apparatus (10) according to any preceding claim, wherein the wing portion (12a) is inclined at an angle of approximately 30 degrees to the horizontal plane in said partially raised position.

9. A mowing apparatus (10) according to any preceding claim, wherein the coupling means comprises a cam (23a) and a cam follower (25a) respectively provided on said portions, the drive and cutting means being coupled and decoupled by the cam follower according to the profile of the cam (23a).

10. A mowing apparatus (10) according to claim 9, wherein an axis of rotation of the cam (23a) is substantially parallel to the main axis.

11. A mowing apparatus (10) according to claim 10, wherein the axis of rotation of the cam (23a) is coaxial with the main axis.

12. A mowing apparatus (10) according to any of claims 9 to 11, wherein the cam (23a) comprises an outer radial edge comprising a first radial dimension and a second circumfrentially spaced radial dimension not equal to the first radial dimension.

13. A mowing apparatus (10) according to any of claims 9 to 12 as appended to claim 2, wherein the cam follower (25a) is arranged to displace the belt tensioner so as to vary the tension of the belt (22a) to couple and decouple the drive and cutting means according to said angular positions of the wing.

14. A mowing apparatus (10) according to claim 13 as appended to claim 7, wherein the cam follower (25a) is disposed on a distal end of the arm (24a) and the belt tensioner is disposed intermediate the proximal and distal ends of the arm.

15. A mowing apparatus (10) according to any of claims 1 to 8, wherein the coupling means comprises a rigid member coupled at a first end to the wing portion (12a) at a position located eccentrically with respect to the main axis and coupled at a second end to the belt tensioner, the rigid member being arranged to displace the belt tensioner so as to vary the tension of the belt (22a) to couple and decouple the drive and cutting means according to said angular positions of the wing.

16. A mowing apparatus (10) according to claim 15, wherein the coupling of the first end of the rigid member comprises a slot (281 a) extending in a direction substantially parallel to a longitudinal axis of the rigid member and a pin (242a) arranged for sliding engagement with the slot (281 a) and constrained therein, the pin (242a) being attached to the wing portion (12a).

17. A mowing apparatus (10) according to claim 16, wherein the coupling of the second end of the rigid member comprises a pivotal coupling having a fixed axis of rotation.

18. A mowing apparatus (10) according to claim 17, wherein the coupling of the second end of the rigid member comprises a slot (281a) extending in a direction substantially parallel to a longitudinal axis of the rigid member and a pin (242a) arranged for sliding engagement with the slot (281a) and constrained therein, the pin (242a) being attached to the belt tensioner.

19. A mowing apparatus (10) according to claim 18 as appended to claim 7, wherein the pin (242a) is fixedly coupled to the arm (24a).

20. A mowing apparatus (10) according to claim 18 or claim 19, wherein the coupling of the first end of the rigid member comprises a pivotal coupling having a fixed axis of rotation.

## Patentansprüche

1. Mähvorrichtung (10), die Folgendes aufweist:
einen Gehäuseteil (11), der ein Drehantriebsmittel aufweist;
einen Flügelteil (12a) zur Ineingriffnahme des zu mähenden Grases oder von anderem Pflanzenmaterial, wobei der Flügelteil (12a) ein Drehschneidmittel, das zum Mähen des Grases oder anderen Pflanzenmaterials angeordnet ist und zwischen einer abgesenkten Mähstellung und einer angehobenen Stellung um eine Hauptachse relativ zum Gehäuseteil (11) schwenkbar ist, aufweist; und
ein Mittel zum Kuppeln des genannten Antriebsmittels mit dem genannten Schneidmittel durch einen begrenzten Bereich von Winkelstellungen des Flügels (12a) zwischen der genannten abgesenkten Stellung und einer teilweise angehobenen Stellung, wobei das genannte Kupplungsmittel angeordnet ist, um das genannte Antriebsmittel mit dem genannten Schneidmittel zu kuppeln, wenn der Flügel in der genannten abgesenkten Stellung ist, und das genannte Antriebsmittel von dem genannten Schneidmittel abzukuppeln, wenn der Flügel in der genannten teilweise angehobenen Stellung ist,
wobei das Kupplungsmittel Folgendes aufweist:
eine erste Riemenscheibe (17a), die an dem Gehäuse vorgesehen ist und mit dem genannten Drehantriebsmittel gekuppelt ist,
**dadurch gekennzeichnet, dass** das Kupplungsmittel ferner eine zweite Riemenscheibe (21a) aufweist, die zur Drehung um eine Achse, die längs der genannten Hauptachse verläuft, am Flügelteil montiert ist, wobei die zweite Riemenscheibe (21a) mit dem genannten Schneidmittel gekuppelt ist,
einen Riemen (22a), der um die genannte erste und zweite Riemenscheibe verläuft, und
einen Riemenspanner, der zum Verändern der Spannung des Riemens (22a) zum Kuppeln und Abkuppeln des Antriebs- und des Schneidmittels gemäß den genannten Winkelstellungen des Flügels angeordnet ist.

2. Mähvorrichtung (10) nach Anspruch 1, wobei die Drehachse der zweiten Riemenscheibe (21a) mit der Hauptachse koaxial ist.

3. Mähvorrichtung (10) nach Anspruch 1 oder Anspruch 2, wobei die Drehachse der ersten Riemenscheibe (17a) zur Drehachse der zweiten Riemenscheibe (21a) im Wesentlichen parallel ist.

4. Mähvorrichtung (10) nach einem der Ansprüche 1 bis 3, wobei der Riemenspanner eine Führungsscheibe (26a) umfasst.

5. Mähvorrichtung (10) nach Anspruch 4, wobei die Führungsscheibe (26a) von einem Vorspannmittel zum Riemen (22a) hin vorgespannt wird.

6. Mähvorrichtung (10) nach Anspruch 5, wobei das Vorspannmittel eine Gasfeder (27a) umfasst.

7. Mähvorrichtung (10) nach einem der Ansprüche 4 bis 6, die ferner einen Arm (24a) aufweist, der an seinem proximalen Ende schwenkbar mit dem Gehäuseteil (11) gekuppelt ist, wobei die Führungsscheibe (26a) an dem Arm (24a) angeordnet ist, so dass die Drehung des Arms (24a) das Verlagern der Führungsscheibe (26a) und dadurch das Verändern der Spannung des Riemens zum Kuppeln und Abkuppeln des Antriebs- und des Schneidmittels gemäß den genannten Winkelstellungen des Flügels bewirkt.

8. Mähvorrichtung (10) nach einem der vorhergehenden Ansprüche, wobei der Flügelteil (12a) in der genannten teilweise angehobenen Stellung in einem Winkel von etwa 30 Grad zur horizontalen Ebene geneigt ist.

9. Mähvorrichtung (10) nach einem der vorhergehenden Ansprüche, wobei das Kupplungsmittel eine Kurvenscheibe (23a) und einen Kurvenstößel (25a) aufweist, die jeweils an den genannten Teilen vorgesehen sind, wobei das Antriebs- und das Schneidmittel gemäß dem Profil der Kurvenscheibe (23a) vom Kurvenstößel gekuppelt und entkuppelt werden.

10. Mähvorrichtung (10) nach Anspruch 9, wobei eine Drehachse der Kurvenscheibe (23a) im Wesentlichen parallel zur Hauptachse ist.

11. Mähvorrichtung (10) nach Anspruch 10, wobei die Drehachse der Kurvenscheibe (23a) mit der Hauptachse koaxial ist.

12. Mähvorrichtung (10) nach einem der Ansprüche 9 bis 11, wobei die Kurvenscheibe (23a) einen äußeren radialen Rand aufweist, der eine erste radiale Abmessung und eine zweite am Umfang beabstandete radiale Abmessung, die nicht gleich der ersten radialen Abmessung ist, aufweist.

13. Mähvorrichtung (10) nach einem der Ansprüche 9 bis 12, wenn abhängig von Anspruch 2, wobei der Kurvenstößel (25a) zum Verlagern des Riemenspanners angeordnet ist, um die Spannung des Riemens (22a) zum Kuppeln und Abkuppeln des Antriebs- und des Schneidmittels gemäß den genannten Winkelstellungen des Flügels angeordnet ist.

14. Mähvorrichtung (10) nach Anspruch 13, wenn abhängig von Anspruch 7, wobei der Kurvenstößel (25a) an einem distalen Ende des Arms (24a) angeordnet ist und der Riemenspanner zwischen dem proximalen und dem distalen Ende des Arms angeordnet ist.

15. Mähvorrichtung (10) nach einem der Ansprüche 1 bis 8, wobei das Kupplungsmittel ein starres Element aufweist, das an einem ersten Ende an einer Position, die in Bezug auf die Hauptachse exzentrisch liegt, mit dem Flügelteil (12a) gekuppelt ist und an einem zweiten Ende mit dem Riemenspanner gekuppelt ist, wobei das starre Element zum Verlagern des Riemenspanners angeordnet ist, um die Spannung des Riemens (22a) zum Kuppeln und Abkuppeln des Antriebs- und des Schneidmittels gemäß den genannten Winkelstellungen des Flügels zu verändern.

16. Mähvorrichtung (10) nach Anspruch 15, wobei die Kupplung des ersten Endes des starren Elements eine Aussparung (281a), die in einer Richtung verläuft, die zu einer Längsachse des starren Elements im Wesentlichen parallel ist, und einen Stift (242a), der für den Gleiteingriff mit der Aussparung (281a) angeordnet und in ihr eingeschränkt ist, aufweist, wobei der Stift (242a) an dem Flügelteil (12a) angebracht ist.

17. Mähvorrichtung (10) nach Anspruch 16, wobei die Kupplung des zweiten Endes des starren Elements eine Schwenkkupplung mit einer festen Drehachse umfasst.

18. Mähvorrichtung (10) nach Anspruch 17, wobei die Kupplung des zweiten Endes des starren Elements eine Aussparung (281a), die in einer Richtung verläuft, die zu einer Längsachse des starren Elements im Wesentlichen parallel ist, und einen Stift (242a), der für den Gleiteingriff mit der Aussparung (281a) angeordnet und in ihr eingeschränkt ist, aufweist, wobei der Stift (242a) an dem Riemenspanner angebracht ist.

19. Mähvorrichtung (10) nach Anspruch 18, wenn abhängig von Anspruch 7, wobei der Stift (242a) fest mit dem Arm (24a) gekuppelt ist.

20. Mähvorrichtung (10) nach Anspruch 18 oder Anspruch 19, wobei die Kupplung des ersten Endes des starren Elements eine Schwenkkupplung mit einer festen Drehachse umfasst.

## Revendications

1. Un appareil de tonte (10) comprenant :
une partie corps (11) comprenant un moyen d'entraînement rotatif,
une partie ailette (12a) destinée à entrer en prise avec l'herbe ou une autre matière végétale à couper, la partie ailette (12a) comprenant un moyen de coupe rotatif agencé de façon à couper l'herbe ou une autre matière végétale et étant pivotable autour d'un axe principal par rapport à la partie corps (11) entre une position de coupe abaissée et une position relevée, et
un moyen de couplage dudit moyen d'entraînement audit moyen de coupe par l'intermédiaire d'une plage limitée de positions angulaires de l'ailette (12a) entre ladite position abaissée et une position partiellement relevée, ledit moyen de couplage étant agencé de façon à coupler ledit moyen d'entraînement et ledit moyen de coupe lorsque l'ailette est dans ladite position abaissée et à découpler ledit moyen d'entraînement dudit moyen de coupe lorsque l'ailette est dans ladite position partiellement relevée,
le moyen de couplage comprenant une première poulie (17a) placée sur le corps et couplée audit moyen d'entraînement rotatif,
**caractérisé en ce que** le moyen de couplage comprend en outre une deuxième poulie (21a) montée sur la partie ailette en vue d'une rotation autour d'un axe qui s'étend longitudinalement à partir dudit axe principal, la deuxième poulie (21a) étant raccordée audit moyen de coupe,
une courroie (22a) s'étendant autour desdites première et deuxième poulies, et
un tendeur de courroie agencé de façon à varier la tension de la courroie (22a) de façon à coupler et découpler les moyens d'entraînement et de coupe en fonction desdites positions angulaires de l'ailette.

2. Un appareil de tonte (10) selon la Revendication 1, où l'axe de rotation de la deuxième poulie (21a) est coaxial avec l'axe principal.

3. Un appareil de tonte (10) selon la Revendication 1 ou 2, où l'axe de rotation de la première poulie (17a) est sensiblement parallèle à l'axe de rotation de la deuxième poulie (21a).

4. Un appareil de tonte (10) selon l'une quelconque des Revendications 1 à 3, où le tendeur de courroie comprend une poulie tendeur (26a).

5. Un appareil de tonte (10) selon la Revendication 4, où la poulie tendeur (26a) est sollicitée vers la courroie (22a) par un moyen de sollicitation.

6. Un appareil de tonte (10) selon la Revendication 5, où le moyen de sollicitation comprend un ressort à gaz (27a).

7. Un appareil de tonte (10) selon l'une quelconque des Revendications 4 à 6 comprenant en outre un bras (24a) couplé de manière pivotante au niveau de son extrémité proximale à la partie corps (11), où la poulie tendeur (26a) est disposée sur le bras (24a) de sorte qu'une rotation du bras (24a) agisse de façon à déplacer la poulie tendeur (26a) et ainsi varier la tension de la courroie (22a) de façon à coupler et découpler les moyens d'entraînement et de coupe en fonction desdites positions angulaires de l'ailette.

8. Un appareil de tonte (10) selon l'une quelconque des Revendications précédentes, où la partie ailette (12a) est inclinée à un angle d'environ 30 degrés par rapport au plan horizontal dans ladite position partiellement relevée.

9. Un appareil de tonte (10) selon l'une quelconque des Revendications précédentes, où le moyen de couplage comprend une came (23a) et un galet suiveur de came (25a) respectivement placés sur lesdites parties, les moyens d'entraînement et de coupe étant couplés et découplés par le galet suiveur de came en fonction du profil de la came (23a).

10. Un appareil de tonte (10) selon la Revendication 9, où un axe de rotation de la came (23a) est sensiblement parallèle à l'axe principal.

11. Un appareil de tonte (10) selon la Revendication 10, où l'axe de rotation de la came (23a) est coaxial avec l'axe principal.

12. Un appareil de tonte (10) selon l'une quelconque des Revendications 9 à 11, où la came (23a) comprend un bord radial extérieur comprenant une première dimension radiale et une deuxième dimension radiale circonférentiellement espacée non égale à la première dimension radiale.

13. Un appareil de tonte (10) selon l'une quelconque des Revendications 9 à 12 telles qu'annexées à la Revendication 2, où le galet suiveur de came (25a) est agencé de façon à déplacer le tendeur de courroie de façon à varier la tension de la courroie (22a) de façon à coupler et découpler les moyens d'entraînement et de coupe en fonction desdites positions angulaires de l'ailette.

14. Un appareil de tonte (10) selon la Revendication 13 telle qu'annexée à la Revendication 7, où le galet suiveur de came (25a) est disposé sur une extrémité distale du bras (24a) et le tendeur de courroie est disposé entre les extrémités distale et proximale du bras.

15. Un appareil de tonte (10) selon l'une quelconque des Revendications 1 à 8, où le moyen de couplage comprend un élément rigide couplé au niveau d'une première extrémité à la partie ailette (12a) à une position située excentriquement par rapport à l'axe principal et couplé au niveau d'une deuxième extrémité au tendeur de courroie, l'élément rigide étant agencé de façon à déplacer le tendeur de courroie de façon à varier la tension de la courroie (22a) de façon à coupler et découpler les moyens d'entraînement et de coupe en fonction desdites positions angulaires de l'ailette.

16. Un appareil de tonte (10) selon la Revendication 15, où le couplage de la première extrémité de l'élément rigide comprend une fente (281a) s'étendant dans une direction sensiblement parallèle à un axe longitudinal de l'élément rigide et une goupille (242a) agencée pour une mise en prise coulissante avec la fente (281a) et contrainte dans celle-ci, la goupille (242a) étant fixée à la partie ailette (12a).

17. Un appareil de tonte (10) selon la Revendication 16, où le couplage de la deuxième extrémité de l'élément rigide comprend un couplage pivotant possédant un axe de rotation fixe.

18. Un appareil de tonte (10) selon la Revendication 17, où le couplage de la deuxième extrémité de l'élément rigide comprend une fente (281a) s'étendant dans une direction sensiblement parallèle à un axe longitudinal de l'élément rigide et une goupille (242a) agencée pour une mise en prise coulissante avec la fente (281a) et contrainte dans celle-ci, la goupille (242a) étant fixée au tendeur de courroie.

19. Un appareil de tonte (10) selon la Revendication 18 telle qu'annexée à la Revendication 7, où la goupille (242a) est couplée fermement au bras (24a).

20. Un appareil de tonte (10) selon la Revendication 18 ou 19, où le couplage de la première extrémité de l'élément rigide comprend un couplage pivotant possédant un axe de rotation fixe.
